# EUROPÄISCHE PATENTSCHRIFT

(11) **EP 1 910 114 B1**
(45) Veröffentlichungstag und Bekanntmachung des Hinweises auf die Patenterteilung: **21.09.2011**
(21) Anmeldenummer: 06761795.1
(22) Anmeldetag: 13.07.2006
(51) Int. Cl.: B60J 7/12

(54) **CABRIOLET-FAHRZEUG**
CONVERTIBLE VEHICLE
VEHICULE CABRIOLET

(30) Priorität: 22.07.2005 DE 102005034310
(43) Veröffentlichungstag der Anmeldung: 16.04.2008
(73) Patentinhaber: Wilhelm Karmann GmbH, 49084 Osnabrück (DE)
(72) Erfinder: THEUERKAUF, Jürgen, 49565 Bramsche (DE)
(74) Vertreter: Kronthaler, Schmidt & Coll.
(86) Internationale Anmeldenummer: PCT/DE2006/001209
(87) Internationale Veröffentlichungsnummer: WO 2007/009434

(56) Entgegenhaltungen:
- EP-A2- 1 164 039
- DE-C1- 19 618 296
- DE-C1- 19 962 377

## Beschreibung

Die Erfindung bezieht sich auf ein Cabriolet-Fahrzeug mit einem eine flexible Dachhaut aufweisenden Faltverdeck, das im Heckbereich einen unterhalb einer Heckscheibe gelegenen, mehrteiligen Verdeckspannbügel hat, der zwei neben einem eine Mittelteilschwenkachse aufweisenden Mittelteil angeordnete, jeweils eine Seitenteilschwenkachse aufweisende Seitenteile umfasst.

Ein Cabriolet-Fahrzeug der vorgenannten Art ist aus DE 196 18 296 C1 bekannt. Dort ist ein heckseitiger Verdeckspannbügel vorgesehen, der bei Verlagerung um ein karosseriefestes Hauptlager in einem heckseitigen Verdeckkasten ablegbar und aus diesem zurückschwenkbar ist. Die Seitenteile des Verdeckspannbügels sind mit dem Mittelteil jeweils derart über ein Schwenkgelenk verbunden, dass die Breite des Verdeckspannbügels und damit auch die Spannwirkung an der heckseitigen Dachhaut veränderbar ist. Dazu ist der Verdeckspannbügel dreiteilig ausgebildet. Das Mittelteil und die jeweiligen Seitenteile sind über ein Federscharnier miteinander verbunden. Da sich die Schwenkachse parallel zur Fahrzeuglängsachse erstreckt, sind die Seitenteile zwecks Verringerung der Breite des Verdeckstoffspannbügels hoch zu verschwenken.

Aus der EP 1 164 039 A2 ist ein Cabriolet-Fahrzeug der eingangs genannten Art bekannt, bei dem der Verdeckspannbügel insgesamt dreiteilig mit zwei schwenkbeweglich an einem Mittelteil angeordneten Seitenteilen ausgebildet ist, welche jeweils um senkrecht zur Fahrzeuglängsmittelebene verlaufende Seitenteilschwenkachsen verschwenkt werden können. Das Mittelteil ist kippbar ausgebildet. Durch die im wesentlichen senkrecht zur Fahrzeuglängsmittelebene verlaufenden Schwenkachsen ist der dort vorgesehenen Heckscheibe eine definierte Kippstellung zu vermitteln, so dass das Mittelteil des Verdeckspannbügels und der mit der Heckscheibe verbundene Dachhautbereich des Faltverdecks nach Art einer Schwenksteuerung verlagert werden kann. Ist das Cabriolet-Fahrzeug jedoch mit in den Schwenkbereich des Verdeckspannbügels hineinragenden Einbauten versehen, sind der Schwenkbeweglichkeit des Verdeckspannbügels Grenzen gesetzt. Auch mit hochklappbaren Seitenteilen ist der Verdeckspannbügel nicht ohne weiteres in einem Heckkasten ablegbar, weil aufgrund der Größe des zu verschwenkenden Verdeckspannbügels ein in vielen Anwendungsfällen nicht zur Verfügung zu stellender Schwenkbewegungsraum erforderlich ist.

Aus der DE 199 62 377 C1 ist ein Fahrzeugdach mit einem zwischen einer Schließstellung und einer Ablagestellung verstellbarem Faltverdeck bekannt, bei dem ein Stoffspannbügel vorgesehen ist, der ein Mittelteil aufweist, an den sich zu jeder seiner Seiten ein Seitenteil anschließt, wobei sich die Seitenteile relativ zu dem Mittelteil in eine geneigte Klappstellung überführen lassen. Ansonsten werden die Seitenteile mitsamt dem Mittelteil über eine Verstellkinematik in eine Ablagestellung im Stauraum des Fahrzeuges gebracht.

Nachteilig hierbei ist, dass in der geklappten Stellung der Seitenteile der Stoffspannbügel noch einen erheblichen Ablageraum beansprucht, der bei vorgesehenen Einbauten im Stauraum vielfach nicht zur Verfügung steht.

Es ist Aufgabe der vorliegenden Erfindung, ein Cabriolet-Fahrzeug der eingangs genannten Art zu schaffen, dessen Verdeckspannbügel für eine Öffnungsbewegung des Faltverdecks auf eine einen verringerten Schwenkbewegungsraum beanspruchende Gesamtlängenerstreckung verkleinerbar ist.

Zur Lösung dieser Aufgabe zeichnet sich das Cabriolet-Fahrzeug der eingangs genannten Art dadurch aus, dass die Seitenteile jeweils an einem mit dem Faltverdeck verbundenen Verbindungsgelenk angelenkt und von dem Mittelteil getrennt ausgebildet sind, so dass die Seitenteile gegenüber dem Mittelteil durch eine überlagerte Schwenkbewegung aus einer die Dachhaut des Faltverdecks spannenden Betriebsstellung in eine Öffnungsstellung zu überführen sind, bei der sie sich über und/oder unterhalb des Mittelteils oder von dem Mittelteil zugeordneten Verbindungsteilen erstrecken.

Damit ist ein Cabriolet-Fahrzeug zur Verfügung gestellt, bei dem die Seitenteile gegenüber dem Mittelteil eine überlagerte Schwenkbewegung dahingehend ausführen können, dass sie aus einer die Dachhaut des Faltverdeckes spannenden Betriebsstellung in eine Öffnungsstellung zu überführen sind, bei der sie sich über und/oder unterhalb des Mittelteiles bzw. von dem Mittelteil zugeordneten Verbindungsteilen erstrecken. Die Seitenteilschwenkachsen und die Mittelteilschwenkachse können sich dabei in einer selben parallelen Ebene kreuzen.

Bevorzugtermaßen sind jedoch die Seitenteilschwenkachsen und die Mittelteilschwenkachse in verschiedenen Hochebenen gelegen, so dass sie insgesamt Teil einer nach Art eines räumlichen Getriebes aufgebauten Schwenkvorrichtung sind.

Bevorzugtermaßen sind dabei die Seitenteile an Verbindungsgelenken angelenkt, die sich an einer Hauptsäule des Faltverdeckes abstützen. Diese können bolzenförmige Verbindungsgelenkteile haben. Durch die Öffnungsbewegung des Faltverdeckes können aufgrund der spitzwinkeligen Zuordnung der Seitenteilschwenkachse zu der Mittelteilschwenkachse bzw. einer Mittelteillängsachse automatisch die überlagerten Schwenkbewegungen ausgeführt werden, so dass im Verlaufe der Öffnungsbewegung des Faltverdeckes der Verdeckspannbügel und die an diesen angebundenen Bereiche des flexiblen Dachhaut eine Packstellung einnehmen, in der sie ein wesentlich geringeres Maß von der Längserstreckung her aufweisen als in der Stellung bei geschlossenem Faltverdeck. Damit ist das Faltverdeck insgesamt auch in einem Heckbereich bei einem Fahrzeug ablegbar, der durch Fahrzeugein- bzw. -aufbauten beeinträchtig ist.

Zur weiteren Ausgestaltung der Erfindung wird auf weitere Unteransprüche, die nachfolgende Beschreibung und die Zeichnung verwiesen. In der Zeichnung zeigen:

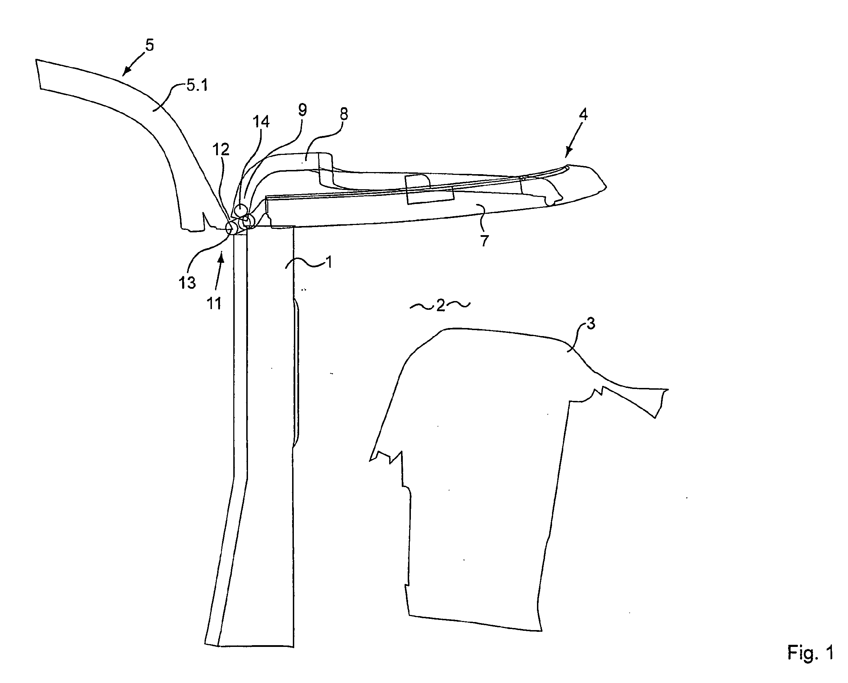

- Fig. 1:: eine Seitenansicht eines Ausführungsbeispiels nach der Erfindung (ausschnittsweise) in Schließstellung des Faltverdeckes;
- Fig. 2:: ausschnittsweise eine Draufsicht auf das Ausfüh- rungsbeispiel nach Fig. 1;

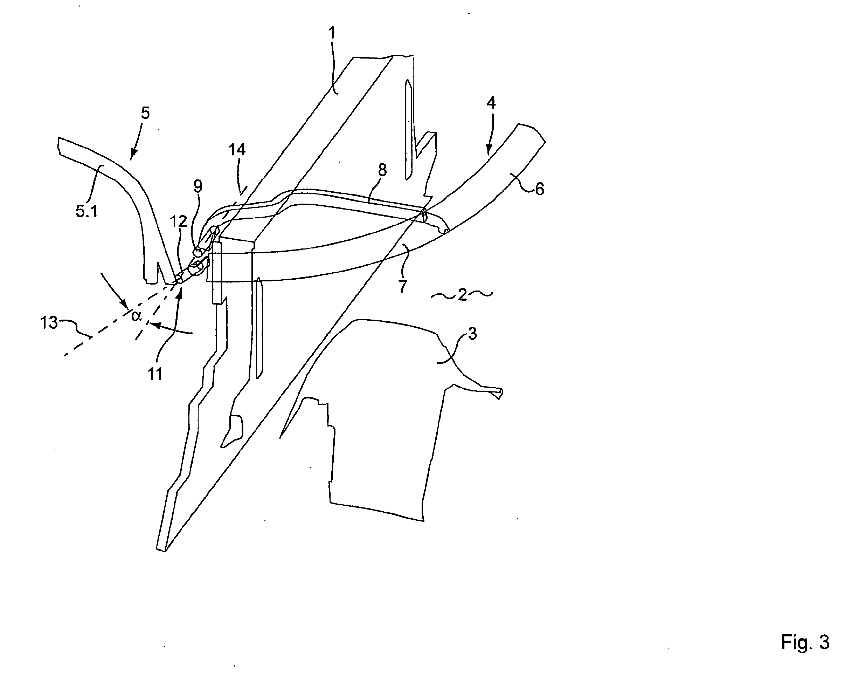

- Fig. 3:: eine perspektivische Ansicht schräg von hinten auf das Ausführungsbeispiel nach Fig. 1;
- Fig. 4, 5, 6:: das Ausführungsbeispiel nach den Fig. 1 bis 3 in jeweils analogen Darstellungen (Seitenansicht, Draufsicht und Perspektivdarstellung) während der Öffnungsphase des Faltverdeckes;
- Fig. 7:: eine zu den Fig. 1 und Fig. 4 analoge Darstellung bei geöffnetem Faltverdeck, und
- Fig. 8:: eine zu den Fig. 3 und 6 analoge Darstellung bei ge- öffnetem Faltverdeck.

In der Zeichnung sind gleichwirkende Teile mit übereinstimmenden Bezugsziffern bezeichnet. Der besseren Übersichtlichkeit ist das Cabriolet-Fahrzeug nur ausschnittsweise dargestellt. Dieses soll eine nicht näher dargestellte flexible Dachhaut haben, ein Faltgestell, ein karosserieseitigen Heckbereich mit einem Heckkasten, in dem das Faltverdeck mit der darin integrierten Heckscheibe abzulegen ist.

Allgemein mit 1 ist eine die Karosserie des Cabriolet-Fahrzeuges durchsetzende Karosseriequerwand beziffert, hinter der sich ein allgemein mit 2 angedeuteter Heckbereich mit einem Heckkasten anschließt, in den Karosserieeinbauten hineinragen, die exemplarisch mit dem Teil 3 angedeutet sind. Für einen Öffnungsvorgang des Faltverdeckes muss der insgesamt mit 4 bezifferte Verdeckspannbügel an diesem eingebauten Teil 3 vorbeibewegt werden, damit das Verdeck mit dem Verdeckgestell 5 und dessen Hauptsäule 5.1 in den Heckkasten des Heckbereiches 2 abzulegen ist.

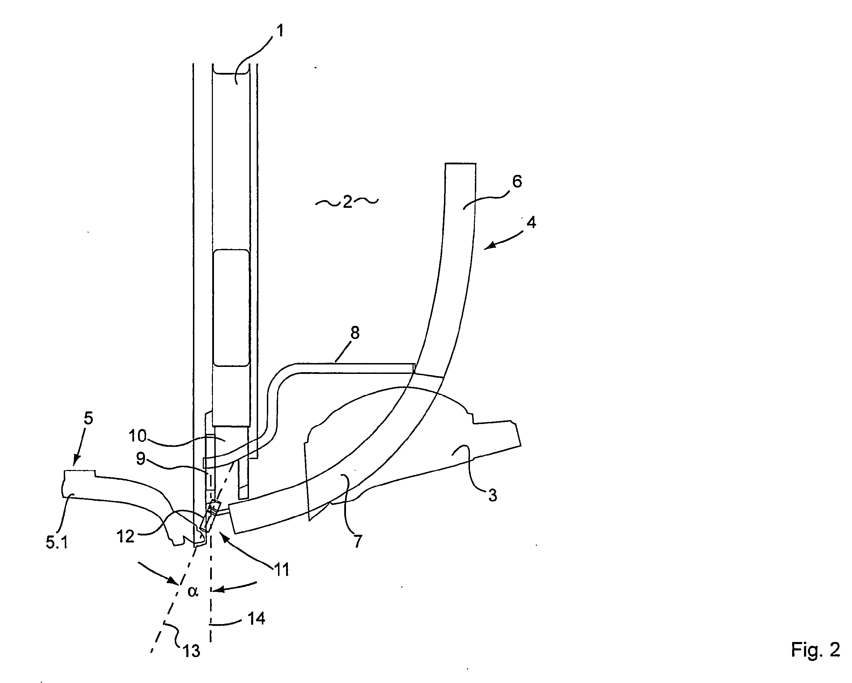

Der Verdeckspannbügel 4 ist dreiteilig aufgebaut mit einem Mittelteil 6 und zwei Seitenteilen 7, von denen in den Zeichnungen nur jeweils ein Seitenteil veranschaulicht ist. Das Mittelteil 4 ist über einen abgekröpften Gelenkverbinder 8 mit seinem Schwenkgelenk 9 verbunden. Die Abkröpfung des Gelenkverbinders ist so ausgebildet, dass der Gelenkverbinder 8 in den aus Fig. 2 bei 10 ersichtlichen Ausschnitt der Karosseriequerwand 1 eintauchen kann und sich im Heckbereich hinter dieser Querwand langerstreckt, bis er um 90° abgewinkelt zu dem Mittelteil 6 reicht.

Das Seitenteil 7 ist seinerseits an einem Verbindungsgelenk 11, das einen Gelenkbolzen 12 aufweist, angelenkt. Die Mittelachse dieses Gelenkbolzens 12 bestimmt die Seitenteilschwenkachse, die in der Zeichnung mit 13 beziffert ist. Die Schwenkachse des Mittelteils 6 ist bei 9 mit 14 beziffert. Die Seitenteilschwenkachse 13 kreuzt die Mittelteilschwenkachse 14 in unterschiedlichen Hochebenen unter einem spitzen Winkel α.

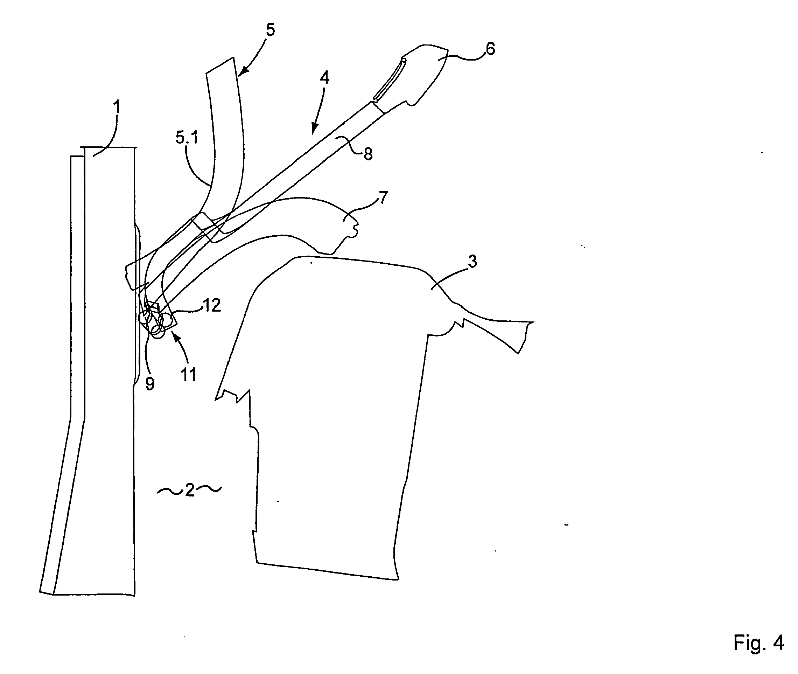

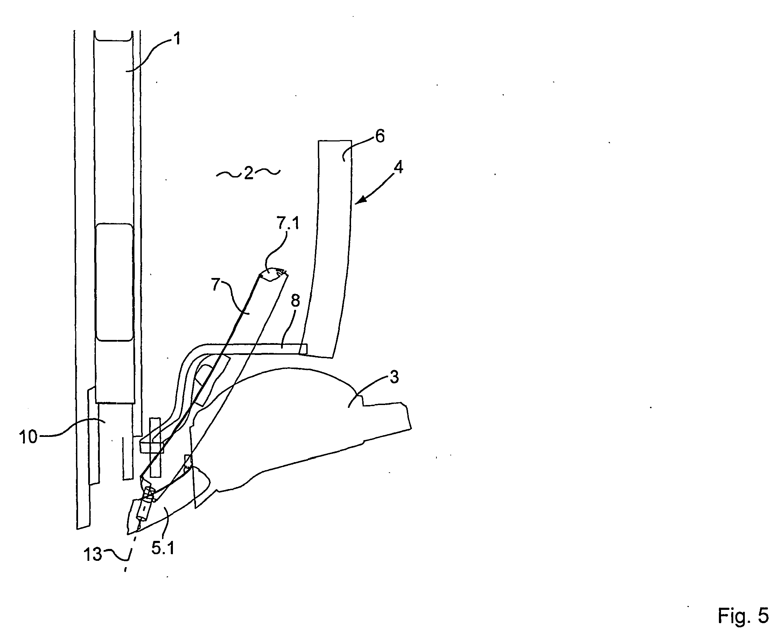

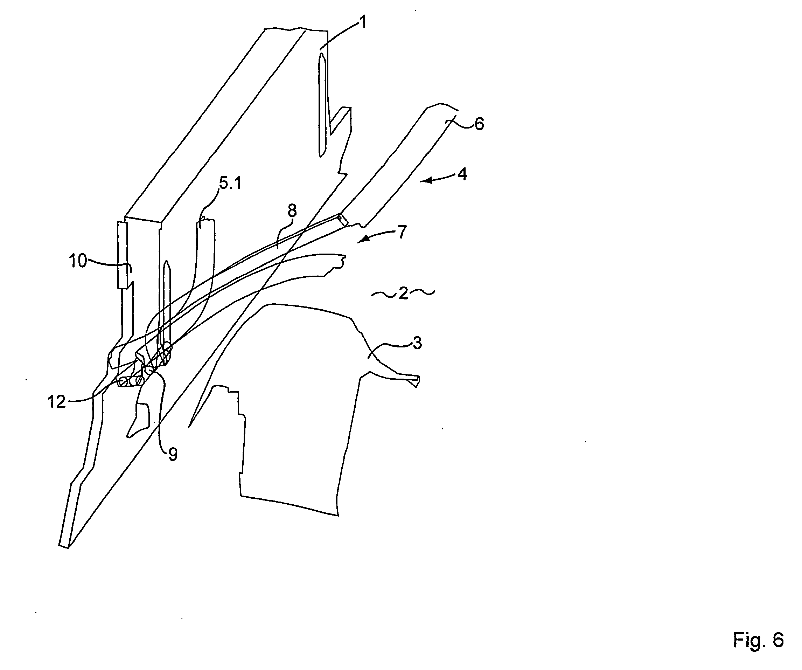

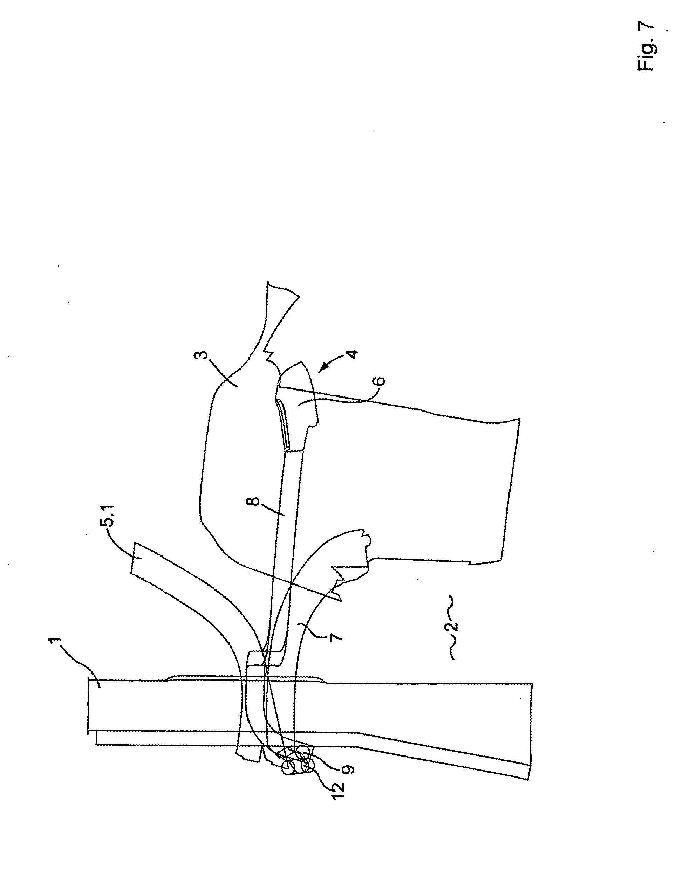

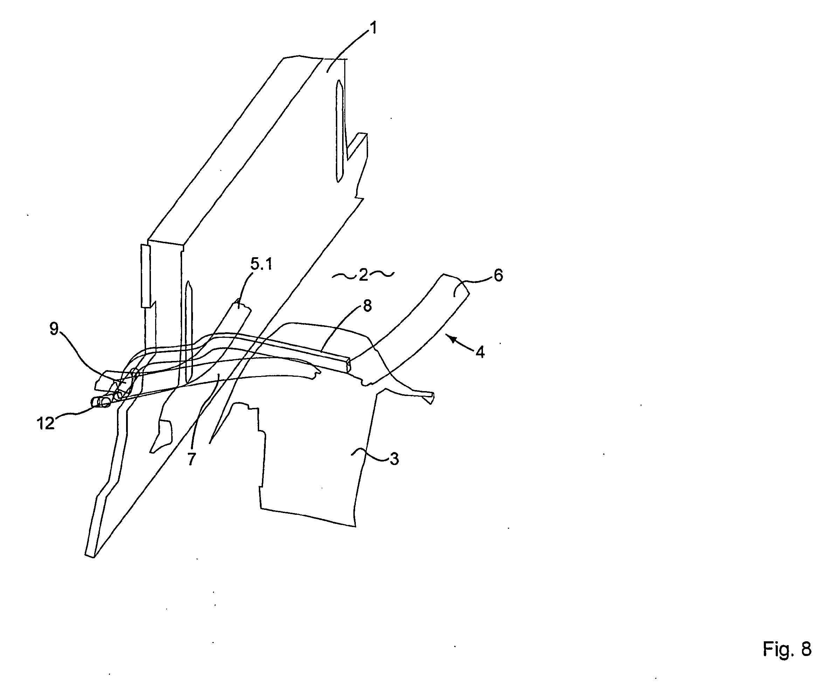

Der Gelenkbolzen 12 ist direkt an der Hauptsäule 5.1 des Verdeckgestells 5 befestigt. Im Verlaufe der Schwenkbewegung des Faltverdecks im Öffnungssinne wird die Hauptsäule 5.1 zum Heckbereich hin verschwenkt. Dabei schwenkt das Mittelteil 6 um die Schwenkachse 14, die sich parallel zur Querwand 1 erstreckt. Das Seitenteil 7 hingegen wird um die Schwenkachse 13 in Richtung des Hecks des Heckbereiches verschwenkt, wodurch dieses Seitenteil gegenüber dem Mittelteil 6 eine überlagerte Bewegung dahingehend durchführt, dass es mit seinem äußeren Ende 7.1 zur Fahrzeugmitte hin verschwenkt wird (Fig. 4 bis 6), so dass es bei vollständig geöffnetem Faltverdeck unterhalb des Gelenkverbinders 8 des Mittelteils 6 zu liegen kommt und mithin trotz des in den Heckbereich hineinragenden Fahrzeugeinbaus in der in Fig. 7 und 8 dargestellten Packstellung im Heckbereich 2 des Fahrzeuges mitsamt der Dachhaut und dem Verdeckgestell abgelegt werden kann.

Während der Verschwenkung des Verdeckspannbügels 4 werden das Mittelteil 6 und die Seitenteile 7 mit in den Heckbereich abgesenkt, so dass auch deren Achsen 13, 14 mit abgesenkt werden, wobei jedoch die relative Ausrichtung der Seitenteilschwenkachse 13 zu der Mittelteilschwenkachse 14 weiterhin so ist, dass sie in unterschiedlichen Hochebenen einander kreuzen.

Insgesamt ist damit ein Cabriolet-Fahrzeug zur Verfügung gestellt, bei dem das Packmaß des Faltverdeckes in der Öffnungsstellung des Daches wesentlich zu reduzieren ist. Die Anbindung der flexiblen Dachhaut am verschwenkbaren Seitenteil 7 ist dabei so gewählt, dass die Dachhaut nicht an dem Seitenbügel 7 insgesamt angebunden ist, sondern nur in einem Teilbereich, der sich von innen bis etwa kurz nach dem gebogenen Bereich des Seitenteils 7 erstreckt. Damit ist zum einen das Einwärtsverschwenken sicher zu vollziehen, gleichwohl jedoch auch eine wirksame Spannung des Verdeckes im geschlossenen Zustand zu bewirken.

## Patentansprüche

1. Cabriolet-Fahrzeug mit einem eine flexible Dachhaut aufweisenden Faltverdeck (5), das im Heckbereich (2) einen unterhalb einer Heckscheibe gelegenen, mehrteiligen Verdeckspannbügel (4) hat, der zwei neben einem eine Mittelteilschwenkachse (14) aufweisenden Mittelteil (6) angeordnete, jeweils eine Seitenteilschwenkachse (13) aufweisende Seitenteile (7) umfasst, wobei die Seitenteilschwenkachsen (13) die Mittelteilschwenkachse (14) unter einem spitzen Winkel (α) kreuzen,
**dadurch gekennzeichnet,**
**dass** die Seitenteile (7) jeweils an einem mit dem Faltverdeck (5) verbundenen Verbindungsgelenk (11) angelenkt und von dem Mittelteil (6) getrennt ausgebildet sind, so dass die Seitenteile (7) gegenüber dem Mittelteil (6) durch eine überlagerte Schwenkbewegung aus einer die Dachhaut des Faltverdecks (5) spannenden Betriebsstellung in eine Öffnungsstellung zu überführen sind, bei der sie sich über und/oder unterhalb des Mittelteiles (6) oder von dem Mittelteil (6) zugeordneten Verbindungsteilen erstrecken.

2. Cabriolet-Fahrzeug nach Anspruch 1,
**dadurch gekennzeichnet,**
**dass** die Seitenteilschwenkachse (13) und die Mittelteilschwenkachse (14) einander in unterschiedlichen waagerechten Ebenen kreuzen.

3. Cabriolet-Fahrzeug nach Anspruch 1 oder 2,
**dadurch gekennzeichnet,**
**dass** die Seitenteilschwenkachsen (13) und die Mittelteilschwenkachse (14) jeweils in Ebenen gelegen sind, die sich ihrerseits unter einem spitzen Winkel kreuzen.

4. Cabriolet-Fahrzeug nach einem der Ansprüche 1 bis 3,
**dadurch gekennzeichnet,**
**dass** die Mittelteilschwenkachse (14) im wesentlichen senkrecht zur vertikalen Fahrzeuglängsmittelebene ausgerichtet ist.

5. Cabriolet-Fahrzeug nach einem der Ansprüche 1 bis 4,
**dadurch gekennzeichnet,**
**dass** die Seitenteile (7) des Verdeckspannbügels (4) Verbindungsgelenke (11) haben, die an einer seitlichen Hauptsäule (5.1) des Faltverdeckes (5) abgestützt sind.

6. Cabriolet-Fahrzeug nach einem der Ansprüche 1 bis 5,
**dadurch gekennzeichnet,**
**dass** die Seitenteile (7) und das Mittelteil (6) an Verbindungsgelenken (9, 12) abstützbar sind, die mit dem Faltverdeck (5) während dessen Öffnungsbewegung in eine abgesenkte Betriebsstellung und aus dieser heraus zurück in eine erhöhte Betriebsstellung überführbar sind.

7. Cabriolet-Fahrzeug nach einem der Ansprüche 1 bis 6,
**dadurch gekennzeichnet,**
**dass** das Mittelteil (6) über einen abgekröpften Gelenkverbinder (8) mit seinen Verbindungsgelenken (12) verbindbar ist.

8. Cabriolet-Fahrzeug nach einem der Ansprüche 1 bis 7,
**dadurch gekennzeichnet,**
**dass** die Seitenteile (7) im Verlaufe ihrer Schwenkbewegung unter das Mittelteil (6) des Verdeckspannbügels (4) zu verschwenken sind.

9. Cabriolet-Fahrzeug nach einem der Ansprüche 1 bis 8,
**dadurch gekennzeichnet,**
**dass** ein Seitenteil (7) bereichsweise mit der flexiblen Dachhaut verbindbar ist.

10. Cabriolet-Fahrzeug nach Anspruch 9,
**dadurch gekennzeichnet,**
**dass** die flexible Dachhaut soweit mit dem Seitenteil (7) verbunden ist, dass sich eine Dachhautanbindung an dem Seitenteil (7) über einen gebogenen Bereich eines Seitenteils (7) erstreckt.

## Claims

1. A cabriolet vehicle with a folding top (5) which has a flexible roof skin and which, in the rear area (2), has a multipart folding top tensioning bracket (4) situated underneath a rear window, which bracket comprises two lateral parts (7), respectively having a lateral part pivot axis (13) and being arranged adjacent to a central part (6) which has a central part pivot axis (14), wherein the lateral part pivot axes (13) intersect the central part pivot axis (14) at an acute angle (α),
**characterized in that**
the lateral parts (7) are articulated respectively on a connecting joint (11), which is connected with the folding top (5), and are constructed separately from the central part (6), so that the lateral parts (7) are able to be transferred with respect to the central part (6) by a superimposed pivoting movement from an operating position tensioning the roof skin of the folding top (5) into an opening position, in which they extend over and/or beneath the central part (6) or extend from connecting parts associated with the central part (6).

2. The cabriolet vehicle according to Claim 1,
**characterized in that**
the lateral part pivot axis (13) and the central part pivot axis (14) intersect each other in different horizontal planes.

3. The cabriolet vehicle according to Claim 1 or 2,
**characterized in that**
the lateral part pivot axes (13) and the central part pivot axis (14) are respectively situated in planes which in turn intersect each other at an acute angle.

4. The cabriolet vehicle according to one of Claims 1 to 3,
**characterized in that**
the central part pivot axis (14) is aligned substantially perpendicularly to the vertical longitudinal central plane of the vehicle.

5. The cabriolet vehicle according to one of Claims 1 to 4,
**characterized in that**
the lateral parts (7) of the top tensioning bracket (4) have connecting joints (11), which are supported on a lateral main column (5.1) of the folding top (5).

6. The cabriolet vehicle according to one of Claims 1 to 5,
**characterized in that**
the lateral parts (7) and the central part (6) are able to be supported on connecting joints (9, 12), which are able to be transferred with the folding top (5) during its opening movement into a lowered operating position and back out from this into a raised operating position.

7. The cabriolet vehicle according to one of Claims 1 to 6,
**characterized in that**
the central part (6) is able to be connected via an offset joint connector (8) with its connecting joints (12).

8. The cabriolet vehicle according to one of Claims 1 to 7,
**characterized in that**
the lateral parts (7), in the course of their pivoting movement, are able to be pivoted underneath the central part (6) of the top tensioning bracket (4).

9. The cabriolet vehicle according to one of Claims 1 to 8,
**characterized in that**
a lateral part (7) is able to be connected partially with the flexible roof skin.

10. The cabriolet vehicle according to Claim 9,
**characterized in that**
the flexible roof skin is connected with the lateral part (7) to an extent such that a roof skin connection on the lateral part (7) extends over a curved region of a lateral part (7).

## Revendications

1. Véhicule cabriolet comprenant une capote escamotable (5) qui présente une garniture de toit flexible et dispose dans la zone arrière (2) d'un étrier tendeur de capote (4) en plusieurs parties situé au-dessous d'une lunette arrière, lequel étrier comprend deux parties latérales (7) disposées à côté d'une partie centrale (6) présentant un axe de pivotement de partie centrale (14) et présentant chacune un axe de pivotement de partie latérale (13), les axes de pivotement de partie latérale (13) croisant l'axe de pivotement de partie centrale (14) sous un angle aigu (α),
**caractérisé**
**en ce que** les parties latérales (7) sont articulées chacune sur une articulation de liaison (11) reliée à la capote escamotable (5) et sont conçues séparément de la partie centrale (6), de sorte que les parties latérales (7) doivent être transférées par rapport à la partie centrale (6) par un mouvement de basculement superposé à partir d'une position de service tendant la garniture de toit de la capote escamotable (5) dans une position d'ouverture dans laquelle elles s'étendent au-dessus et/ou au-dessous de la partie centrale (6) ou de parties de liaison attribuées à la partie centrale (6).

2. Véhicule cabriolet selon la revendication 1,
**caractérisé**
**en ce que** l'axe de pivotement de partie latérale (13) et l'axe de pivotement de partie centrale (14) se croisent dans différents plans horizontaux.

3. Véhicule cabriolet selon la revendication 1 ou 2,
**caractérisé**
**en ce que** les axes de pivotement de partie latérale (13) et l'axe de pivotement de partie centrale (14) sont situés respectivement dans des plans qui se croisent pour leur part en formant un angle aigu.

4. Véhicule cabriolet selon l'une quelconque des revendications 1 à 3,
**caractérisé**
**en ce que** l'axe de pivotement de partie centrale (14) est orienté sensiblement perpendiculairement au plan médian longitudinal vertical du véhicule.

5. Véhicule cabriolet selon l'une quelconque des revendications 1 à 4,
**caractérisé**
**en ce que** les parties latérales (7) de l'étrier tendeur de capote (4) ont des articulations de liaison (11), qui sont soutenues sur une colonne principale (5.1) de la capote escamotable (5).

6. Véhicule cabriolet selon l'une quelconque des revendications 1 à 5,
**caractérisé**
**en ce que** les parties latérales (7) et la partie centrale (6) peuvent être soutenues sur des articulations de liaison (9, 12), qui peuvent être transférées avec la capote escamotable (5) pendant son mouvement d'ouverture dans une position de service abaissée et à partir de celle-ci en revenant dans une position de service élevée.

7. Véhicule cabriolet selon l'une quelconque des revendications 1 à 6,
**caractérisé**
**en ce que** la partie centrale (6) peut être reliée au moyen d'un raccord articulé (8) coudé à ces articulations de liaison (12).

8. Véhicule cabriolet selon l'une quelconque des revendications 1 à 7,
**caractérisé**
**en ce que** les parties latérales (7) doivent basculer au cours de leur moment de pivotement au-dessous de la partie centrale (6) de l'étrier tendeur de capote (4).

9. Véhicule cabriolet selon l'une quelconque des revendications 1 à 8,
**caractérisé**
**en ce qu'**une partie latérale (7) peut être reliée par endroits à la garniture de toit flexible.

10. Véhicule cabriolet selon la revendication 9,
**caractérisé**
**en ce que** la garniture de toit flexible est reliée à la partie latérale (7), de telle sorte qu'un rattachement de la garniture de toit à la partie latérale (7) s'étend sur une zone pliée d'une partie latérale (7).
